# FASCICULE DE BREVET EUROPEEN

(11) **EP 3 859 135 B1**
(45) Date de publication et mention de la délivrance du brevet: **26.10.2022**
(21) Numéro de dépôt: 21151265.2
(22) Date de dépôt: 13.01.2021
(51) Int. Cl.: F02C 7/14, F02K 1/82, F02K 3/115

(54) **TURBOMACHINE POUR AÉRONEF EQUIPÉE D'UN SYSTÈME THERMO-ACOUSTIQUE**
TURBOTRIEBWERK FÜR FLUGZEUG MIT THERMOAKUSTISCHEM SYSTEM
TURBINE ENGINE FOR AIRCRAFT PROVIDED WITH A THERMOACOUSTIC SYSTEM

(30) Priorité: 28.01.2020 FR 2000797
(43) Date de publication de la demande: 04.08.2021
(73) Titulaire: AIRBUS OPERATIONS (S.A.S.), 31060 Toulouse (FR)
(72) Inventeur: LIVEBARDON, Thomas, 31000 TOULOUSE (FR); ZEBIAN, Maxime, 31060 TOULOUSE Cedex 9 (FR)
(74) Mandataire: Gicquel, Olivier Yves Gérard

(56) Documents cités:
- EP-A1- 3 038 101
- EP-A1- 3 244 039
- US-A1- 2016 017 810
- US-A1- 2017 159 566

## Description

La présente invention concerne une turbomachine pour aéronef équipée d'un système thermo-acoustique pour refroidir les fluides nécessaires au fonctionnement de la turbomachine ainsi que pour atténuer les nuisances sonores émises lors dudit fonctionnement.

Une turbomachine à double flux présente un conduit de soufflante, au travers duquel l'air soufflé par la soufflante de la turbomachine transite pour finalement être éjecté au niveau de l'échappement de la turbomachine. Le conduit de soufflante est délimité par des parois qui canalisent l'air. Ces parois sont formées de structures d'atténuation acoustique assurant une atténuation des ondes acoustiques générées par l'écoulement de l'air dans le conduit de soufflante et permettent ainsi d'atténuer le bruit de la turbomachine.

Les parois peuvent également être équipés d'échangeurs thermiques de type à ailettes, utilisés pour réaliser un échange thermique entre l'air circulant dans le conduit de soufflante et des canalisations transportant des fluides (par exemple : huile, kérosène) permettant le fonctionnement de la turbomachine afin de refroidir ces derniers.

Or, l'implémentation d'échangeurs thermiques au niveau des parois du conduit de soufflante diminue la surface dévolue au traitement acoustique et par conséquent la capacité du traitement acoustique à atténuer le bruit de la turbomachine. En outre, les ailettes des échangeurs thermiques induisent une traînée supplémentaire dans le conduit de soufflante qui diminue les performances aérodynamiques de la turbomachine

Afin de résoudre ces problèmes, il est connu par le document EP3038101, un système thermo-acoustique comprenant une structure d'atténuation acoustique de type nid d'abeille au sein de laquelle sont arrangées une pluralité de canalisations transportant des fluides à refroidir. La structure d'atténuation acoustique comprend des perforations permettant à l'air du conduit de soufflante de pénétrer dans des cavités de la structure d'atténuation qui forment des résonateurs acoustiques. L'air sert également à refroidir les canalisations intégrées dans la structure d'atténuation acoustique, et par conséquent sert au refroidissement des fluides.

Cette solution bien qu'efficace présente l'inconvénient que les canalisations occupent une partie non négligeable de l'épaisseur de la structure d'atténuation acoustique, ce qui diminue la capacité des résonateurs à atténuer les ondes sonores.

Un des objectifs de la présente invention est de trouver un système thermo-acoustique qui ne présente pas les inconvénients susmentionnés.

A cet effet, l'invention concerne turbomachine à double flux telle que revendiquée dans la revendication 1. Le document EP3244039 décrit le préambule de la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- la figure 1 est une vue schématique, en coupe selon son axe longitudinal, d'une turbomachine équipée d'un système thermo-acoustique selon un mode de réalisation de l'invention ;
- la figure 2 est une vue schématique en éclaté du système thermo-acoustique représenté à la figure 1, ledit système comprenant une structure d'atténuation acoustique et un échangeur reliés par une pluralité de tube caloducs selon un mode de réalisation de l'invention ;
- la figure 3 est une vue schématique d'une structure d'atténuation acoustique du système thermo-acoustique de la figure 2 selon un mode de réalisation de l'invention ;
- la figure 4 est une vue de détail montrant un arrangement du système thermo-acoustique de la figure 1 selon un mode de réalisation de l'invention ;
- la figure 5 est une vue similaire à la figure 4, montrant un arrangement du système thermo-acoustique de la figure 1 selon un autre mode de réalisation de l'invention.

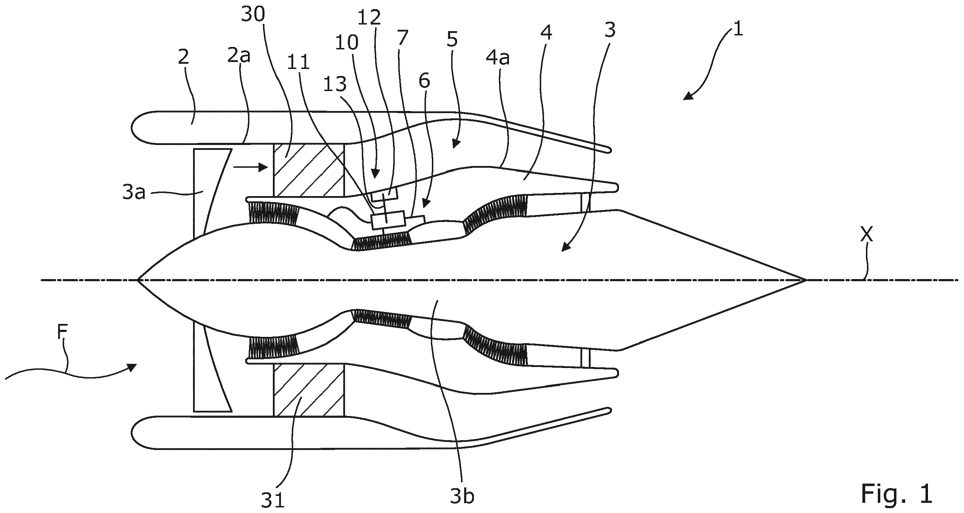

En référence avec la figure 1, une turbomachine à double flux 1 d'un aéronef (non représenté) comprend une nacelle annulaire 2, centrée sur un axe longitudinal X (dit axe moteur) et entourant un moteur 3.

Dans le sens d'écoulement d'un flux d'air (flèche F) traversant la turbomachine 1 lors du fonctionnement de cette dernière, le moteur 3 comprend d'amont en aval et centrés sur l'axe moteur X, une soufflante 3a, et un corps de moteur 3b permettant de faire tourner la soufflante 3a lorsque le moteur 3 est mis en marche.

La turbomachine 1, comprend de plus, en aval de la soufflante 3a, une interveine annulaire 4 concentrique au corps de moteur 3b.

La nacelle 2 entoure l'interveine 4 avec laquelle elle est concentrique. La paroi interne 2a de la nacelle 2 forme, avec la paroi externe 4a de l'interveine, les parois d'un conduit de soufflante 5 qui s'étend le long de l'axe moteur X et se prolonge jusqu'à l'arrière de la nacelle 2 où l'air est éjecté.

La nacelle 2 et l'interveine 4 sont reliées entre elles par deux bifurcations 30,31 diamétralement opposées (une à 12h et une à 6h), où chaque bifurcation 30,31 s'étend radialement dans le conduit de soufflante 5. Chaque bifurcation 30,31 a ainsi une peau soumise au flux d'air F transitant dans le conduit de soufflante 5.

La turbomachine 1 comprend un circuit de fluide 6 pour alimenter le moteur 3 en un fluide L (non représenté sur la figure 1) nécessaire à son fonctionnement, comme, par exemple, l'huile. Le circuit de fluide 6 comprend notamment des canalisations 7 dans lesquelles circule le fluide L, vers ou hors du moteur 3.

Le fonctionnement du moteur 3, génère une montée en température du fluide L. La turbomachine 1 comprend un système thermo-acoustique 10 associé au circuit de fluide 6 pour refroidir le fluide L chauffé par le fonctionnement du moteur, mais également pour atténuer les ondes acoustiques générées par l'écoulement de l'air dans le conduit de soufflante 5.

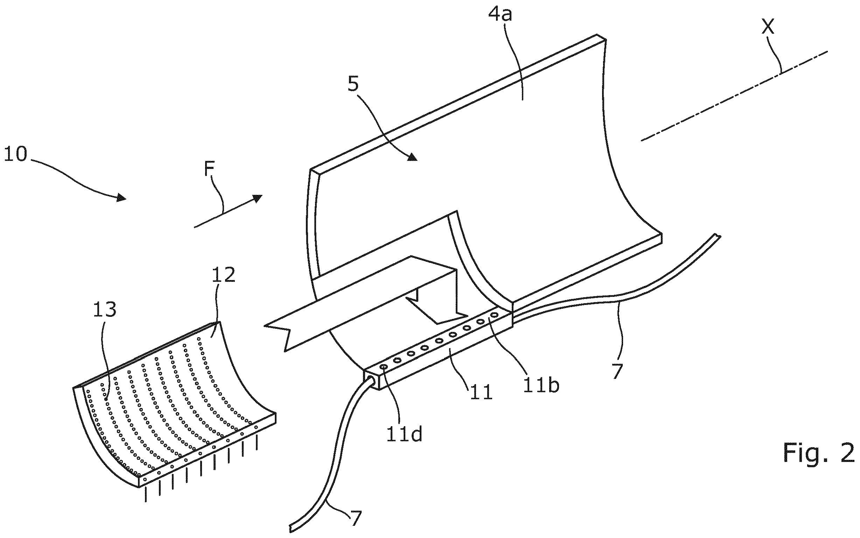

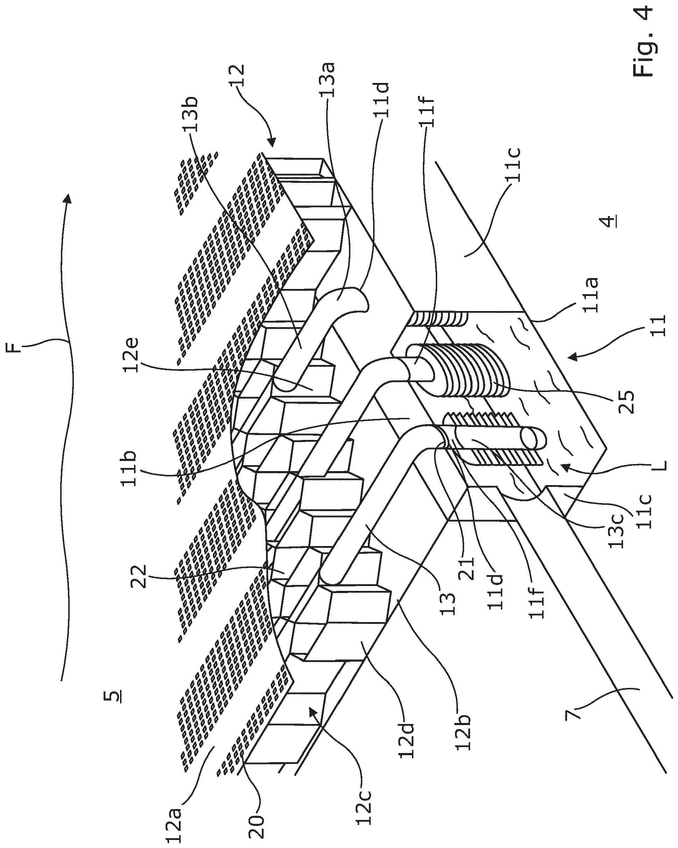

Selon un mode de réalisation de l'invention, et en relation avec les figures 2 à 4, le système thermo-acoustique 10 comprend :
- un échangeur 11 connecté à un circuit de fluide 6 et dans lequel transite un fluide L à refroidir ;
- une structure d'atténuation acoustique 12, distincte de l'échangeur 11, et formant en tout ou partie une paroi du conduit de soufflante pour atténuer les ondes acoustiques générées par l'écoulement de l'air dans le conduit de soufflante 5,
- et au moins un tube caloduc 13 connectant la structure d'atténuation acoustique 12 avec l'échangeur 11, le tube caloduc 13 comprenant une première portion 13b reçue intégralement dans la structure acoustique 12 et une seconde portion 13c avec une extrémité reçue dans l'échangeur 11, et un unique coude cintré avec un angle non nul non nul 13a entre les deux portions.

On notera que dans l'exemple représenté sur les figures 2 à 4, l'échangeur 11 et la structure d'atténuation acoustique 12 sont arrangés dans l'épaisseur de l'interveine 4 et la structure d'atténuation acoustique 12 forme une partie de la paroi externe 4a de l'interveine 4. En outre, dans cet exemple, le système thermo-acoustique 10 comprend une pluralité de tubes caloducs 13 dont les coudes 13a sont cintrés à 90°.

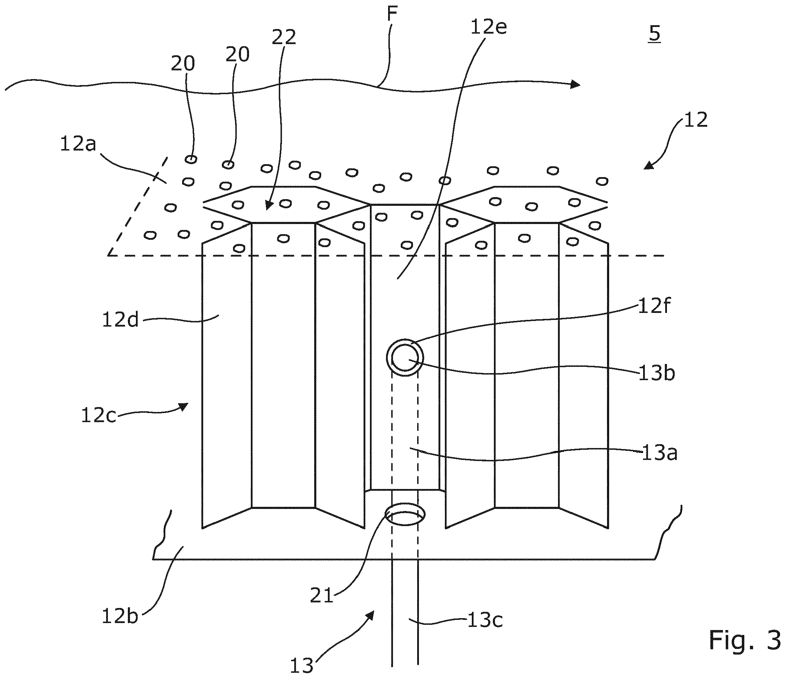

En relation avec la figure 3, la structure d'atténuation acoustique 12, de type nid d'abeille, comprend un premier panneau 12a, un second panneau 12b distant du premier panneau, et un noyau 12c interposé entre les deux panneaux et au sein duquel est arrangé le coude 13a de chaque tube caloduc 13 ainsi que la première portion 13b du tube caloduc 13.

Le premier panneau 12a est directement au contact du flux d'air F circulant dans le conduit de soufflante 5 et présente des perforations 20 dimensionnées de façon à ce qu'une partie du flux d'air F propulsé par la soufflante 3a puisse pénétrer dans le noyau 12c, de façon à favoriser une résonance acoustique dans le noyau et d'assurer la dissipation de tout ou d'une partie de l'énergie correspondante.

Le second panneau 12b comprend des orifices 21 pour le passage des tubes caloducs 13, avec un orifice 21 par tube caloduc 13. L'interface entre chaque tube caloduc 13 et le second panneau 12b au niveau d'un orifice 21 est rendue étanche par l'utilisation de tout moyen approprié comme, par exemple, un joint ou un enduit d'étanchéité.

Le noyau 12c est formé par une pluralité de cloisons structurelles 12d s'étendant entre le premier et le second panneau 12a,12b et qui fixées à chacun desdits panneaux pour assurer la cohésion mécanique de la structure d'atténuation acoustique 12. La pluralité de cloisons structurelles 12d formant avec les deux panneaux, un réseau de cavités acoustiques 22, s'étendant entre les deux panneaux et où chaque cavité acoustique 22 communique avec le conduit de soufflante 5 via les perforations 20 pratiquées sur le premier panneau 12a.

Certaines cloisons structurelles 12e, dites de support, supportent les tubes caloducs 13 reçus dans la structure d'atténuation acoustique 12 afin d'assurer l'intégrité structurelle de l'ensemble tube caloducs + structure d'atténuation acoustique. Une cloison de support 12e est, par exemple, une cloison qui est fixée à chacun desdites panneau 12a,b et présente un orifice 12f au travers duquel passe un tube caloduc.

L'échangeur 11 se présente sous la forme d'un solide creux de forme parallélépipédique ayant une paroi de fond 11a, dit fond, et une paroi formant capot 11b, dit capot, parallèles l'une à l'autre et qui sont reliées entre elles par quatre parois latérales 11c deux à deux parallèles, et toutes perpendiculaires au fond 11a et au capot 11b. Le capot 11b comprend des orifices traversant 11d, et un fourreau 11f est arrangé dans chacun des orifices traversant et est soudé au capot 11b de manière étanche. Chaque fourreau est destiné à recevoir la seconde portion 13c du tube caloduc 13c est a pour ce faire, une forme cylindrique creuse s'étendant longitudinalement dans l'épaisseur de l'échangeur 11, du capot 11b vers le fond 11a. En alternative, le capot 11b est embouti afin de former les fourreaux 11f.

Un échangeur à ailette 25 est, de préférence, arrangé autour du fourreau 11f dans la partie du fourreau 11f destinée à être en contact le fluide à refroidir L. L'échangeur à ailette 25 permet de favoriser l'échange thermique entre le fluide L contenu dans l'échangeur 11 et le tube caloduc 13.

Pour que le fluide à refroidir L transite par l'échangeur 11, deux parois latérales 11c, de préférence en regard l'une de l'autre, sont chacune équipées d'un connecteur fluidique (non représenté) permettant de connecter une canalisation 7 du circuit de fluide 6 auquel est associé l'échangeur 11. Ainsi le fluide L du circuit de fluide 6, sous l'action d'une pompe (non représentée) dudit circuit, se déverse dans l'enceinte de échangeur 11 au travers du premier connecteur fluidique connecté à une première canalisation 7, circule dans l'échangeur 11 suivant un sens de circulation fluidique défini par la pompe, et ressort de l'échangeur 11 au travers du second connecteur fluidique connecté à une seconde canalisation 7.

Chaque tube caloduc 13 se présente sous la forme d'un tube creux de forme circulaire, elliptique ou parallélépipédique. Le tube caloduc 13 est étanche et rempli de fluide caloporteur en équilibre thermodynamique liquide/vapeur.

On notera que dans l'exemple représenté aux figures 1 à 4, l'échangeur 11 et la structure d'atténuation acoustique 12 sont contigus, par besoin d'optimisation d'espace, puisque une des parois de l'échangeur 11 est en contact du second panneau 12b de la structure d'atténuation acoustique 12. Sans sortir du cadre de la présente invention, l'échangeur 11 et la structure d'atténuation acoustique 12 pourraient être séparés d'une plus grande distance.

Au niveau de la structure d'atténuation acoustique 12, chaque tube caloduc 13 traverse, au niveau d'un orifice 21, le second panneau 12b et est supporté par une ou plusieurs cloisons de support 12e.

Au niveau de l'échangeur 11, la seconde portion 11c de chaque tube caloduc 13 est insérée en partie dans un fourreau 11f.

Dans le cas d'un écoulement d'air dans le conduit de soufflante 5, le flux d'air F s'écoule le long du premier panneau 12a de la structure d'atténuation acoustique 12 et les perforations 20 assurent la pénétration d'une partie de l'air F dans les cavités acoustiques 22. Chaque cavité 22 acoustique agit comme un résonateur quart d'onde et permet d'atténuer l'intensité acoustique induite par l'écoulement d'air dans le conduit de soufflante et les sons émis par la circulation de l'air dans le conduit de soufflante 5.

L'extrémité, dite froide, de la première portion 13b du tube caloduc 13 arrangée dans la structure d'atténuation acoustique 12 est balayée par le flux d'air F propulsé par la soufflante 3a tandis que l'extrémité, dite chaude, de la seconde portion 13c du tube caloduc 13 reçue dans l'échangeur baigne dans le fluide L chauffé par le moteur (huile extraite du moteur, ou liquide hydraulique ou kérosène à refroidir).

Du point de vue thermique, en considérant le circuit thermique formé par un tube caloduc 13, l'échangeur 11 et la structure d'atténuation acoustique 12 : l'échangeur 11 forme un évaporateur tandis que la structure d'atténuation acoustique 12 forme un condenseur. A titre d'exemple, lorsque le fluide à refroidir L est de l'huile, la température dans l'échangeur 11 est de l'ordre 100°C tandis que la température au sein du noyau 12c de la structure d'atténuation acoustique 12 est de l'ordre de 50°C.

Les gradients de température entre l'extrémité chaude et l'extrémité froide du tube caloduc 13 génèrent des gradients de pression qui entraînent une circulation du fluide caloporteur permettant le transport de masse et donc de chaleur entre le condenseur et l'évaporateur. En effet, suivant un cycle continu : le liquide caloporteur est chauffé dans l'évaporateur et se vaporise et la vapeur générée se dirige vers l'extrémité froide du tube caloduc où elle se condense en restituant la chaleur latente qu'elle a accumulée. Le liquide formé revient vers l'extrémité chaude du tube caloduc 13 sous l'effet de la gravité. Ainsi, pour assurer le bon fonctionnement du système thermo-acoustique 10, la structure d'atténuation acoustique 12 doit être arrangée plus haut que l'échangeur 11.

L'invention permet de remédier aux inconvénients de l'art antérieur puisque à diamètre égal, un tube caloduc 13 connectant un échangeur 11 à une structure d'atténuation acoustique 10 tel que décrit dans l'invention assure un meilleur échange thermique que les canalisations contenant directement un fluide à refroidir intégrée dans la structure d'atténuation acoustique, tel que décrit dans l'art antérieur.

A titre d'exemple, et à diamètre équivalent, un tube caloduc 13 (avec de l'eau comme fluide caloporteur) arrangé entre un échangeur 11 et une structure d'atténuation acoustique 10 tel que décrit ci-dessus peut faire transiter un flux radial par cm2 de l'ordre de 20 à 100 W tandis qu'une canalisation contenant directement un fluide à refroidir arrangée dans une structure d'atténuation acoustique identique peut faire transiter un flux radial par cm2 de l'ordre de 2 à 5W.

Les tubes caloducs 13 peuvent donc être prévus avec un diamètre plus faible que les canalisations pour une efficacité égale ou supérieure. L'utilisation de tubes caloducs 13 de petit diamètre permet de libérer plus d'espace dans l'épaisseur de la structure d'atténuation acoustique 10 et favorise ainsi l'atténuation des ondes sonores par cette dernière.

Le tube caloduc 13 est, de préférence, pourvu d'un réseau capillaire, arrangé sur la paroi interne du tube (c'est-à-dire la paroi en contact avec le fluide) et réalisé selon différentes techniques qui peuvent être couplées, comme par exemple par la création de rainures sur la paroi interne du tube caloduc 13 avec des rainures qui s'étendent suivant la longueur du tube caloduc 13, ou par un frittage métallique arrangé sur la paroi interne du tube caloduc 13.

Lorsque le tube caloduc est pourvu d'un réseau capillaire, le liquide formé revient vers l'extrémité chaude du tube caloduc 13 avec l'assistance des forces capillaires.

Dans ce cas, contrairement à ce qui a été dit plus haut, lorsque le tube caloduc 13 est pourvu d'un réseau capillaire, la structure d'atténuation acoustique 12 ne doit pas être strictement arrangée plus haut que l'échangeur 11 pour assurer le fonctionnement du système thermo-acoustique 10, même si une telle configuration optimise l'efficacité du système thermo-acoustique 10. En effet, la structure d'atténuation acoustique 12 et l'échangeur 11 peuvent être arrangés à une même hauteur.

Le tube caloduc 13 est réalisé dans un matériau métallique, comme par exemple, le cuivre, ou encore dans un matériau composite. Le fluide caloporteur situé à l'intérieur du tube caloduc 13 est un fluide compatible aux applications aéronautique et aux conditions extrêmes de vol (température, pression ...), comme par exemple l'eau, l'ammoniac, , l'éthanol, le méthanol. Le fluide caloporteur remplit, par exemple, 50 % du volume intérieur total du tube caloduc 13.

Les cloisons 12d structurelles de la structure d'atténuation acoustique 12 sont réalisées dans un matériau métallique ou un matériau composite.

L'échangeur 11 est réalisé dans un matériau métallique, comme par exemple, le titane l'aluminium, le cuivre ou l'inox, ou encore dans un matériau composite.

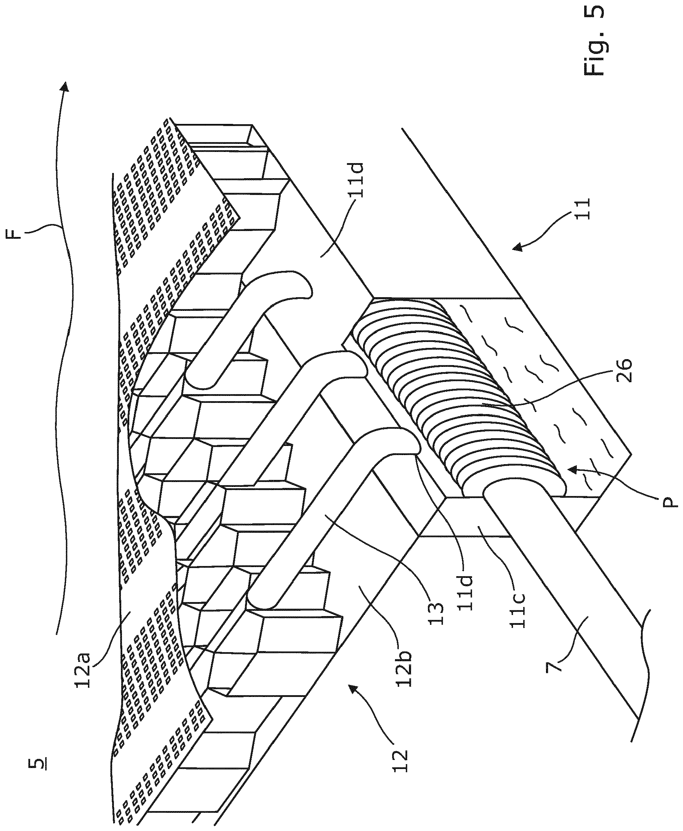

Dans une variante de l'invention, et en relation avec la figure 5, l'échangeur 11 se présente sous la forme telle que décrite au-dessus, excepté le fait qu'il ne comprend pas de fourreaux 11f mais uniquement des orifices traversant 11d arrangés sur le capot 11b. Le fluide L à refroidir reste confiné dans une canalisation 7 du circuit de fluide 6 auquel est associé l'échangeur 11.

Deux parois latérales de l'échangeur 11c, de préférence en regard l'une de l'autre, sont chacune équipées d'un connecteur fluidique (non représenté) permettant de connecter, de manière étanche, une canalisation 7 du circuit de fluide 6. Une portion de la canalisation 7 transite ainsi dans l'échangeur 11, au travers de ce dernier.

L'échangeur 11 est rempli d'un liquide caloporteur P, qui est un fluide compatible aux applications aéronautiques et aux conditions extrêmes de vol (température, pression ...).

Au niveau de l'échangeur 11, la seconde portion 13c de chaque tube caloduc 13 est insérée en partie au travers d'un orifice traversant 11d (avec des moyens appropriés pour assurer une étanchéité de la connexion du tube caloduc 13 avec le capot 11b de l'échangeur 11) et baigne dans le fluide caloporteur P contenu dans l'échangeur 11.

Un échangeur 26 à ailette est, de préférence, arrangé autour de la portion de la canalisation 7 du circuit de fluide 6 comprise dans l'échangeur pour favoriser l'échange thermique entre le fluide caloporteur contenu dans le tube caloduc et le fluide caloporteur P contenu dans l'échangeur 11.

L'invention a été décrite dans le cas où l'échangeur 11 et la structure d'atténuation acoustique 12 sont arrangés dans l'épaisseur de l'interveine 4 et la structure d'atténuation acoustique 12 forme une partie de la paroi externe 4a de l'interveine 4. L'échangeur 11 et la structure d'atténuation acoustique 12 pourraient tout aussi bien être arrangés dans l'épaisseur de la nacelle 2 où dans l'épaisseur d'une des bifurcations 30,31 tant que la structure d'atténuation acoustique 12 est soumise au flux d'air F transitant dans le conduit de soufflante 5.

En outre, la structure d'atténuation acoustique 12 pourrait former une partie de la paroi interne 2a de l'interveine 4, mais l'échangeur pourrait être arrangé dans une bifurcation 30,31 ou dans l'épaisseur de l'interveine 4. Dans ce cas, les tubes caloduc 13 transiteraient par une des bifurcations 30,31.

Enfin, l'invention a été décrite dans le cas où le coude 13a du tube caloduc 13 est cintré à 90°. L'angle du coude cintré 13a est cependant choisi en fonction de l'arrangement de l'échangeur 11 par rapport à la structure d'atténuation acoustique 12, en prenant en compte les contraintes d'espace liées à la promiscuité avec d'autres systèmes de la turbomachine 1. L'angle du coude cintré 13a est ainsi, par exemple, compris entre 10° et 130°, la valeur d'angle de 90° étant celle qui permet l'agencement le plus compact.

## Revendications

1. Turbomachine à double flux (1) pour aéronef comprenant :
- un moteur (3) prévu pour entrainer en rotation une soufflante (3a);
- une interveine annulaire (4) concentrique au moteur (3) ;
- une nacelle (2) concentrique à l'interveine (4), l'interveine (4) et la nacelle (2) définissant entre elles un conduit de soufflante (5) dans lequel s'écoule un flux d'air (F);
- au moins un circuit de fluide (6) configuré pour faire transiter un fluide (L) vers ou hors du moteur (3) ;
la turbomachine (1) comprenant un système thermo-acoustique (10) associé à un circuit de fluide (6), le système thermo-acoustique (10) comprenant un échangeur (11) connecté au circuit de fluide (6) et dans lequel transite un fluide (L) à refroidir, **caractérisé en ce que** le système thermo-acoustique (10) comprend une structure d'atténuation acoustique (12) distincte de l'échangeur (11) et formant en tout ou partie une paroi (2a, 4a) du conduit de soufflante (5), et au moins un tube caloduc (13) comprenant une première portion (13b) reçue intégralement dans la structure acoustique (12) et une seconde portion (13c) avec une extrémité reçue dans l'échangeur (11), et un unique coude cintré avec un angle non nul (13a) entre les deux portions.

2. Turbomachine (1) selon la revendication 1, **caractérisé en ce que** l'angle du coude cintré (13a) est de 90°.

3. Turbomachine (1) selon l'une quelconque des revendications 1 à 2, **caractérisé en ce que** le tube caloduc (13) comprend un réseau capillaire.

4. Turbomachine (1) selon l'une quelconque des revendications 1 à 3, **caractérisé en ce que** la structure d'atténuation acoustique (12) comprend :
- un premier panneau (12a) au contact du flux d'air (F) circulant dans le conduit de soufflante (5) et présentant des perforations (20) ;
- un second panneau (12b) comprenant au moins un orifice (21) pour le passage d'un tube caloduc (13);
- un noyau (12c) ;
le noyau (12c) comprenant ;
- une pluralité de cloisons structurelles (12d) formant avec les deux panneaux (12a,12b), un réseau de cavités acoustiques (22) s'étendant entre les deux panneaux (12a,12b), et où chaque cavité acoustique (22) communique avec le conduit de soufflante (5) via les perforations (20).

5. Turbomachine (1) selon la revendication 4, **caractérisé en ce qu'**au moins une cloison structurelle, dite de cloison de support (12e), présente un orifice (12f) au travers duquel passe le tube caloduc (13).

6. Turbomachine (1) selon la revendication 1, **caractérisé en ce que** l'échangeur (11) se présente sous la forme d'un solide creux de forme parallélépipédique ayant une paroi de fond (11a), dit fond, et une paroi formant capot (11b), dit capot, parallèles l'une à l'autre et qui sont reliées entre elles par quatre parois latérales (11c) deux à deux parallèles, et toutes perpendiculaires au fond (11a) et au capot (11b), l'échangeur (11) comprend un fourreau (11f) arrangé au niveau du capot (11b) dans laquelle est insérée en partie la seconde portion (13c) de chaque tube caloduc (13).

7. Turbomachine (1) selon la revendication 1, **caractérisé en ce que** l'échangeur (11) se présente sous la forme d'un solide creux de forme parallélépipédique ayant une paroi de fond (11a), dit fond, et une paroi formant capot (11b), dit capot, parallèles l'une à l'autre et qui sont reliées entre elles par quatre parois latérales (11c) deux à deux parallèles, et toutes perpendiculaires au fond (11a) et au capot (11b), l'échangeur (11) comprend un orifice traversant (11d) arrangé au niveau du capot (11b) au travers duquel est insérée en partie la seconde portion (13c) de chaque tube caloduc (13).

8. Turbomachine (1) selon la revendication 6, **caractérisé en ce qu'**un échangeur à ailette (25) est arrangé autour du fourreau (11f).

9. Turbomachine (1) selon l'une quelconque des revendications 1 à 8, **caractérisé en ce que** le système thermo-acoustique (10) est arrangé dans l'interveine (4).

10. Turbomachine (1) selon l'une quelconque des revendications 1 à 8, **caractérisé en ce que** l'échangeur (11) est arrangé dans l'interveine (4) et la structure d'atténuation acoustique (12) est arrangée dans la nacelle (2).

11. Turbomachine (1) selon l'une quelconque des revendications 1 à 8, **caractérisé en ce que** le système thermo-acoustique (10) est arrangé dans la nacelle (2).

## Patentansprüche

1. Mantelstrom-Turbotriebwerk (1) für ein Luftfahrzeug, umfassend:
- ein Kerntriebwerk (3), das dafür vorgesehen ist, ein Gebläse (3a) drehend anzutreiben;
- ein ringförmiges Element zwischen Primär- und Sekundärstromkanal (4), das zum Kerntriebwerk (3) konzentrisch ist;
- eine Gondel (2), die zu dem Element zwischen Primär- und Sekundärstromkanal (4) konzentrisch ist, wobei das Element zwischen Primär- und Sekundärstromkanal (4) und die Gondel (2) zwischen sich einen Gebläsekanal (5) definieren, in welchem ein Luftstrom (F) strömt;
- wenigstens einen Fluidkreislauf (6), der dafür ausgelegt ist, ein Fluid (L) zum oder aus dem Kerntriebwerk (3) durchströmen zu lassen;
wobei das Turbotriebwerk (1) ein thermoakustisches System (10) umfasst, das einem Fluidkreislauf (6) zugeordnet ist, wobei das thermoakustische System (10) einen Wärmetauscher (11) umfasst, der mit dem Fluidkreislauf (6) verbunden ist und in welchem ein zu kühlendes Fluid (L) durchströmt, **dadurch gekennzeichnet, dass** das thermoakustische System (10) eine akustische Dämpfungsstruktur (12), die von dem Wärmetauscher (11) verschieden ist und vollständig oder teilweise eine Wand (2a, 4a) des Gebläsekanals (5) bildet, und wenigstens ein Wärmerohr (13) umfasst, das einen ersten Abschnitt (13b), der ganz in der akustischen Struktur (12) aufgenommen ist, und einen zweiten Abschnitt (13c) mit einem Ende, das in dem Wärmetauscher (11) aufgenommen ist, und ein einziges gebogenes Winkelstück mit einem von null verschiedenen Winkel (13a) zwischen den zwei Abschnitten umfasst.

2. Turbotriebwerk (1) nach Anspruch 1, **dadurch gekennzeichnet, dass** der Winkel des gebogenen Winkelstücks (13a) 90° beträgt.

3. Turbotriebwerk (1) nach einem der Ansprüche 1 bis 2, **dadurch gekennzeichnet, dass** das Wärmerohr (13) ein Kapillarnetz umfasst.

4. Turbotriebwerk (1) nach einem der Ansprüche 1 bis 3, **dadurch gekennzeichnet, dass** die akustische Dämpfungsstruktur (12) umfasst:
- eine erste Platte (12a), die mit dem im Gebläsekanal (5) strömenden Luftstrom (F) in Kontakt steht und Perforationen (20) aufweist;
- eine zweite Platte (12b), die mindestens eine Öffnung (21) für den Durchgang eines Wärmerohres (13) umfasst;
- einen Kern (12c);
wobei der Kern (12c) umfasst:
- mehrere strukturelle Trennwände (12d), die mit den zwei Platten (12a, 12b) ein Netz von akustischen Hohlräumen (22) bilden, das sich zwischen den zwei Platten (12a, 12b) erstreckt, und wobei jeder akustische Hohlraum (22) mit dem Gebläsekanal (5) über die Perforationen (20) in Verbindung steht.

5. Turbotriebwerk (1) nach Anspruch 4, **dadurch gekennzeichnet, dass** mindestens eine strukturelle Trennwand, Stütztrennwand (12e) genannt, eine Öffnung (12f) aufweist, durch welche das Wärmerohr (13) verläuft.

6. Turbotriebwerk (1) nach Anspruch 1, **dadurch gekennzeichnet, dass** der Wärmetauscher (11) in der Form eines quaderförmigen hohlen Festkörpers vorliegt, der eine Bodenwand (11a), Boden genannt, und eine eine Haube bildende Wand (11b), Haube genannt, aufweist, die zueinander parallel sind und die durch vier Seitenwände (11c) miteinander verbunden sind, die paarweise parallel sind und die alle senkrecht zum Boden (11a) und zur Haube (11b) sind, wobei der Wärmetauscher (11) eine an der Haube (11b) angeordnete Hülse (11f) umfasst, in welche der zweite Abschnitt (13c) jedes Wärmerohres (13) teilweise eingesetzt ist.

7. Turbotriebwerk (1) nach Anspruch 1, **dadurch gekennzeichnet, dass** der Wärmetauscher (11) in der Form eines quaderförmigen hohlen Festkörpers vorliegt, der eine Bodenwand (11a), Boden genannt, und eine eine Haube bildende Wand (11b), Haube genannt, aufweist, die zueinander parallel sind und die durch vier Seitenwände (11c) miteinander verbunden sind, die paarweise parallel sind und die alle senkrecht zum Boden (11a) und zur Haube (11b) sind, wobei der Wärmetauscher (11) eine an der Haube (11b) angeordnete Durchgangsöffnung (11d) umfasst, durch die hindurch der zweite Abschnitt (13c) jedes Wärmerohres (13) teilweise eingesetzt ist.

8. Turbotriebwerk (1) nach Anspruch 6, **dadurch gekennzeichnet, dass** ein Lamellenwärmetauscher (25) um die Hülse (11f) herum angeordnet ist.

9. Turbotriebwerk (1) nach einem der Ansprüche 1 bis 8, **dadurch gekennzeichnet, dass** das thermoakustische System (10) in dem Element zwischen Primär- und Sekundärstromkanal (4) angeordnet ist.

10. Turbotriebwerk (1) nach einem der Ansprüche 1 bis 8, **dadurch gekennzeichnet, dass** der Wärmetauscher (11) in dem Element zwischen Primär- und Sekundärstromkanal (4) angeordnet ist und die akustische Dämpfungsstruktur (12) in der Gondel (2) angeordnet ist.

11. Turbotriebwerk (1) nach einem der Ansprüche 1 bis 8, **dadurch gekennzeichnet, dass** das thermoakustische System (10) in der Gondel (2) angeordnet ist.

## Claims

1. Bypass turbomachine (1) for an aircraft, comprising:
- a motor (3) provided for turning a fan (3a);
- an annular inter-duct element (4) that is concentric with the motor (3);
- a nacelle (2) that is concentric with the inter-duct element (4), the inter-duct element (4) and the nacelle (2) defining between them a fan duct (5) in which there flows an air flow (F);
- at least one fluid circuit (6) configured to make a fluid (L) move towards or out of the motor (3);
the turbomachine (1) comprising a thermoacoustic system (10) associated with a fluid circuit (6), the thermoacoustic system (10) comprising an exchanger (11) which is connected to the fluid circuit (6) and in which there flows a fluid (L) that is to be cooled, **characterized in that** the thermoacoustic system (10) comprises an acoustic attenuation structure (12) which is distinct from the exchanger (11) and which forms all or part of a wall (2a, 4a) of the fan duct (5), and at least one heat-duct tube (13) comprising a first portion (13b) that is entirely received in the acoustic structure (12) and a second portion (13c) with an end that is received in the exchanger (11), and a single curved elbow with a non-zero angle (13a) between the two portions.

2. Turbomachine (1) according to Claim 1, **characterized in that** the angle of the curved elbow (13a) is 90°.

3. Turbomachine (1) according to either one of Claims 1 and 2, **characterized in that** the heat-duct tube (13) comprises a capillary network.

4. Turbomachine (1) according to any one of Claims 1 to 3, **characterized in that** the acoustic attenuation structure (12) comprises:
- a first panel (12a) in contact with the air flow (F) flowing in the fan duct (5) and having perforations (20);
- a second panel (12b) comprising at least one orifice (21) through which a heat-duct tube (13) is to pass;
- a core (12c);
the core (12c) comprising:
- a plurality of structural partitions (12d) forming, with the two panels (12a, 12b), a network of acoustic cavities (22) extending between the two panels (12a, 12b), and where each acoustic cavity (22) communicates with the fan duct (5) via the perforations (20).

5. Turbomachine (1) according to Claim 4, **characterized in that** at least one structural partition, termed support partition (12e), has an orifice (12f) through which the heat-duct tube (13) passes.

6. Turbomachine (1) according to Claim 1, **characterized in that** the exchanger (11) is in the form of a hollow solid, parallelepipedal in shape, having a bottom wall (11a), termed bottom, and a wall forming a lid (11b), termed lid, these being mutually parallel and connected to one another by four lateral walls (11c) in parallel pairs, all perpendicular to the bottom (11a) and to the lid (11b), the exchanger (11) comprises a sheath (11f) which is arranged at the level of the lid (11b) and into which part of the second portion (13c) of each heat-duct tube (13) is inserted.

7. Turbomachine (1) according to Claim 1, **characterized in that** the exchanger (11) is in the form of a hollow solid, parallelepipedal in shape, having a bottom wall (11a), termed bottom, and a wall forming a lid (11b), termed lid, these being mutually parallel and connected to one another by four lateral walls (11c) in parallel pairs, all perpendicular to the bottom (11a) and to the lid (11b), the exchanger (11) comprises a through-orifice (11d) which is arranged at the level of the lid (11b) and through which part of the second portion (13c) of each heat-duct tube (13) is inserted.

8. Turbomachine (1) according to Claim 6, **characterized in that** a finned exchanger (25) is arranged around the sheath (11f).

9. Turbomachine (1) according to any one of Claims 1 to 8, **characterized in that** the thermoacoustic system (10) is arranged in the inter-duct element (4).

10. Turbomachine (1) according to any one of Claims 1 to 8, **characterized in that** the exchanger (11) is arranged in the inter-duct element (4) and the acoustic attenuation structure (12) is arranged in the nacelle (2).

11. Turbomachine (1) according to any one of Claims 1 to 8, **characterized in that** the thermoacoustic system (10) is arranged in the nacelle (2).
